Europäisches Patentamt

European Patent Office

Office européen des brevets

(11) Veröffentlichungsnummer: **0 011 151**
**B1**

(12) **EUROPÄISCHE PATENTSCHRIFT**

(45) Veröffentlichungstag der Patentschrift:
**12.05.82**

(51) Int. Cl.³: **C 10 J 3/30,** B 01 J 3/02,
B 01 J 8/18, B 01 J 8/24

(21) Anmeldenummer: **79104052.0**

(22) Anmeldetag: **19.10.79**

(54) Vorrichtung zum Eintragen von festen Brennstoffen in einen Druckvergasungsreaktor nach dem Wirbelbett- oder Flugstaub-Prinzip.

(30) Priorität: **18.11.78 DE 2850121**

(43) Veröffentlichungstag der Anmeldung:
**28.05.80 Patentblatt 80/11**

(45) Bekanntmachung des Hinweises auf die Patenterteilung:
**12.05.82 Patentblatt 82/19**

(84) Benannte Vertragsstaaten:
**BE FR GB IT LU NL SE**

(56) Entgegenhaltungen:
**DE-A-906 602**
**DE-C-675 772**
**FR-A-978 138**
**FR-A-1 212 552**
**FR-A-1 412 635**
**US-A-1 941 572**
**US-A-2 355 774**

(73) Patentinhaber: **Werner & Pfleiderer, Theodorstrasse 10,
D-7000 Stuttgart 30 (DE)**
Patentinhaber: **VEBA OEL AG,
Postfach 45 Pawikerstrasse 30, D-4660 Gelsenkirchen
(DE)**

(72) Erfinder: **Grimminger, Albert, Dipl.-Ing., Berghalde 33,
D-7250 Leonberg 7 (DE)**
Erfinder: **Strecker, Jürgen, Dipl.-Ing.,
Gehenbühlstrasse 15, D-7000 Stuttgart-31 (DE)**
Erfinder: **Wiedmann, Werner, Dr.-Ing., Lengefeldweg 23,
D-7000 Stuttgart 31 (DE)**
Erfinder: **Wenning, Peter, Dipl.-Ing., Hoonkesweg 11,
D-4270 Dorsten-Rhade (DE)**

## Vorrichtung zum Eintragen von festen Brennstoffen in einen Druckvergasungsreaktor nach dem Wirbelbett- oder Flugstaub-Prinzip

Die Erfindung betrifft eine Vorrichtung zum Eintragen von festen Brennstoffen in einen Druckvergasungsreaktor der vorstehend genannten Art mit mindestens einer in einem eng anliegenden Gehäuse drehbaren Förderschnekke, von welcher der gegebenenfalls mit einem Bindemittel vermischte feinteilige Brennstoff zu einem gasdichten Massepfropfen verdichtet und durch eine mit dem Druckvergasungsreaktor in Verbindung stehende Austragsöffnung des Gehäuses ausgestoßen wird.

Die Verwendung von ein- oder mehrwelligen Schneckenextrudern zum Beschicken von Kohlevergasungsreaktoren ist beispielsweise bekannt aus DE-A-2 629 182. Bei dem dort beschriebenen Verfahren wird die durch Vermischung mit einem speziellen Bindemittel entstandene pastöse Kohlenmasse durch eine Formgebungsplatte in den Reaktor gepreßt. Dabei entstehen zylindrische Formkörper, die zur Vergasung in einem Festbettreaktor geeignet sind. Ein für den gleichen Zweck bestimmter Schneckenextruder mit einer in der Länge und im Querschnitt veränderlichen Preßdüse ist aus DE-A-2 551 369 bekannt. Auch in diesem Fall werden bei der Formgebung der Kohlenmasse brikettartige Formlinge erzeugt.

Bei der Vergasung von Kohle in Wirbelbett- oder Flugstaub-Reaktoren muß der im Schnekkenextruder bzw. in dessen Austragsöffnung zunächst gebildete dichtende Massepfropfen beim Eintritt in den Reaktorraum wieder zerkleinert werden, damit die Kohle im gewünschten feinteiligen Zustand vergast werden kann. Aus der DE-A-2 256 409 ist ein für diesen Zweck geeigneter Schneckenextruder bekannt, bei weilchem eine mechanische Zerkleinerungseinrichtung für den Massepfropfen vorgesehen ist. Es wurde auch schon vorgeschlagen, die Masse unmittelbar beim Eintritt in den Reaktorraum durch Beaufschlagung mit Druckgas zu zerstäuben.

Die vorstehend erwähnten Schneckenextruder vermögen zwar ihren Zweck im normalen Betrieb eines Druckvergasers zu erfüllen, sie sind jedoch in ihrer bekannten Ausführung für außergewöhnliche Betriebszustände nicht ohne weiteres brauchbar. Dies gilt insbesonders für das Anfahren gegen Gasdruck, was bei den bisherigen Ausführungen nicht möglich ist, so daß der Reaktor im Störfall entspannt werden muß. Außerdem sind die zur Zerkleinerung des Massepfropfens üblichen mechanischen Einrichtungen sehr kompliziert und störanfällig.

Der Erfindung liegt deshalb die Aufgabe zugrunde, eine Vorrichtung der eingangs genannten Art so auszugestalten, daß ein Anfahren gegen Gasdruck möglich ist, ohne dabei die bei Flugstaubvergasern erforderliche feine Verteilung des Brennstoffs zu beeinträchtigen.

Diese Aufgabe wird erfindungsgemäß dadurch gelöst, daß die Austragsöffnung mit einem Verschlußorgan versehen und im Gehäuse nahe der Austragsöffnung eine ins Freie führende, ebenfalls mit einem Verschlußorgan ausgestattete Ablaßöffnung vorgesehen ist, wobei die Verschlußorgane der Austragsöffnung und der Ablaßöffnung wechselweise betätigbar sind. Mit dieser Anordnung läßt sich in einfacher Weise ein Anfahren gegen Gasdruck ausüben, indem die Austragsöffnung durch das ihr zugeordnete Verschlußorgan so lange verschlossen bleibt, bis in der Vorrichtung ein ausreichend gasdichter Massepfropfen gebildet ist. Die während dieser Zeit geförderte Masse gelangt über die Ablaßöffnung, deren Verschlußorgan dann geöffnet ist, ins Freie. Zugleich ist eine wirksame Sicherheitsmaßnahme geschaffen, weil bei einem Störfall die Auslaßöffnung des Schnekkengehäuses sofort verschließbar ist. Dabei wird ein Blockieren der Förderschnecke verhindert, weil das Material durch die Ablaßöffnung entweichen kann.

In weiterer Ausgestaltung der Erfindung ist vorgesehen, daß das Verschlußorgan der Austragsöffnung koaxial zu dieser bewegbar ist. Damit läßt sich ein ringförmiger Spalt bilden, aus dem das Material in Form von Schollen austritt. Vorteilhafterweise ist zur Bewegung des Verschlußorgans der Austragsöffnung eine einstellbare, vorzugsweise hydraulische Druckeinrichtung vorgesehen, mittels welcher die Größe des Masseaustrittsspaltes entsprechend der Konsistenz des Materials und des Druckes im Reaktor reguliert werden kann.

Je nach Größe und Form der Austragsöffnung kann das Verschlußorgan eine auf den Rand der Austragsöffnung aufsetzbare Platte oder ein in die als Düse gestaltete Austragsöffnung eintauchender Stempel sein, wobei im letzteren Falle der Masseaustritt in Form von sehr kleinen Schollen erfolgt, von deren Größe wiederum die Abmessungen der zum Reaktor führenden Druckleitungen beeinflußt werden.

Als weitere Maßnahme zur Zerkleinerung der verdichteten Masse sowie zur Unterstützung des Transports in den Reaktor sind erfindungsgemäß eine oder mehrere auf die Austragsöffnung gerichtete Druckgaszuführungen vorgesehen. Besonders vorteilhaft ist dabei, wenn eine Druckgaszuführung koaxial in dem Verschlußorgan der Austragsöffnung angeordnet ist, weil damit eine Aufspaltung des austretenden Massestranges bewirkt wird.

Ausführungsbeispiele der Erfindung sind in der Zeichnung jeweils im Längsschnitt schematisch dargestellt und nachstehend erläutert. Es zeigt

Fig. 1 eine Vorrichtung zum Eintragen von festen Brennstoffen in einen Druckvergasungsreaktor nach dem Wirbelbett- oder Flugstaub-Prinzip während des Anfahrens,

Fig. 2 den Austragsteil der Vorrichtung nach Fig. 1 im Betriebszustand und

Fig. 3 eine abgewandelte Ausführungsform des Austragsteils, ebenfalls im Betriebszustand.

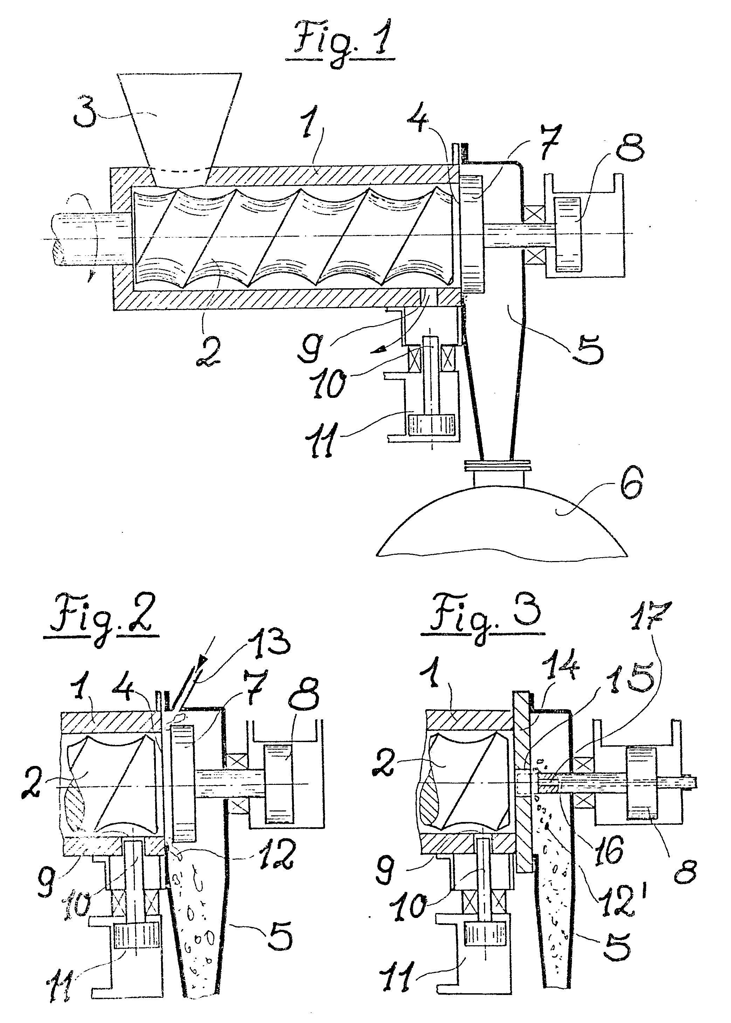

Die Vorrichtung nach Fig. 1 und 2 besteht aus einem zylindrischen Gehäuse 1 mit einer darin drehbaren Förderschnecke 2. Der zu vergasende feste Brennstoff, z. B. Kohle, wird über den Einfülltrichter 3 zugeführt und gegebenenfalls nach Vermischung mit einem Bindemittel, wie beispielsweise Wasser oder Kohlenwasserstoffe, im Gehäuse 1 bzw. in den Gängen der Förderschnecke 2 zu einem gasdichten Massepfropfen verdichtet. Durch eine am rechten Ende des Gehäuses 1 befindliche axiale Austragsöffnung 4 wird die Masse aus dem Gehäuse 1 ausgestoßen und über eine Leitung 5 einem unterhalb der Vorrichtung angeordneten Druckvergasungsreaktor 6 zugeführt.

Innerhalb des von der Leitung 5 umschlossenen Raumes ist gegenüber der Austragsöffnung 4 ein koaxial zu dieser bewegbares Verschlußorgan in Gestalt einer auf den Rand der Austragsöffnung 4 aufsetzbaren Platte 7 vorgesehen. Die Bewegung der Platte 7 erfogt durch eine hydraulische Kolben-Zylinder-Einheit 8, welche die Platte 7 mit einstellbarem Druck gegen die Austragsöffnung 4 hält.

Nahe der Austragsöffnung 4 ist im Gehäuse 1 eine radiale Ablaßöffnung 9 vorgesehen, welche ins Freie führt. Sie ist mit einem in die Öffnung dichtend einschiebbaren Verschlußorgan 10 ausgestattet, zu dessen Bewegung ebenfalls eine hydraulische Kolben-Zylinder-Einheit 11 dient. Die Kolben-Zylinder-Einheiten 8 und 11 sind durch nicht dargestellte Steuer- und Regel-Einrichtungen so miteinander verbunden, daß die ihnen zugeordneten Verschlußorgane wechselweise betätigt werden.

In der aus Fig. 1 ersichtlichen Anfahr-Stellung ist die Austragsöffnung 4 durch die auf ihrem Rand aufsitzende Platte 7 fest verschlossen. Durch die während dessen offene Ablaßöffnung 9 tritt, wie durch einen Pfeil veranschaulicht, die von der Förderschnecke 1 transportierte Masse so lange ins Freie aus, bis eine für den Aufbau des erforderlichen Dichtungsdruckes geeignete Konsistenz der Masse eingestellt ist, dann wird, wie in Fig. 2 dargestellt, die Ablaßöffnung 9 geschlossen und gleichzeitig die Austragsöffnung 4 durch entsprechende Einstellung des von der hydraulischen Kolben-Zylinder-Einheit 8 ausgeübten Druckes so weit geöffnet, daß zwischen Austragsöffnung 4 und Platte 7 ein Spalt entsteht, aus dem die Masse in Form von Schollen 12 austritt. Diese Schollen zerfallen zu Staub, welcher am Ende der Leitung 5 in den Druckvergasungsreaktor 6 gelangt.

Zur Untersützung des Zerfalls der Schollen können, wie in Fig. 2 angedeutet, eine oder mehrere auf die aus dem Spalt austretende Masse gerichtete Druckgaszuführungen 13 vorgesehen sein. Die aus den Druckgaszuführungen 13 austretenden Gasstrahlen können auch allein die Zerkleinerung des austretenden Massepfropfen bewirken, was beispielsweise dann der Fall ist, wenn sich die Platte 7 in ihrer äußersten rechten Endlage befindet. Als Druckgas kann ein Inertgas, Synthesegas oder ein Vergasungsmittel, z. B. ein Wasserdampf-Sauerstoff-Gemisch eingesetzt werden.

Bei der Ausführung nach Fig. 3 ist das Ende des Gehäuses 1 durch eine Stirnwand 14 abgeschlossen. In dieser Stirnwand befindet sich eine als Düse 15 gestaltete Austragsöffnung, in welche als Verschlußorgan ein Stempel 16 dichtend eintaucht. Die Verschlußstellung des Stempels 16 ist mit gestrichelten Linien angedeutet. Die Wirkungsweise ist dieselbe wie bei der Ausführung nach Fig. 2, nur entstehen in diesem Fall kleinere Schollen 12', wodurch für die Leitung 5 kleinere Abmessungen gegenüber der Ausführung nach Fig. 1 und 2 vorgesehen werden können.

Eine Druckgaszuführung 17 als zusätzliches oder alleiniges Mittel zum Zerkleinern des Massepfropfens ist bei der Ausführung nach Fig. 3 koaxial im Stempel 16 angeordnet. Daneben können, ähnlich wie bei Fig. 2, auch noch weitere radiale Druckgaszuführungen vorgesehen sein.

Das Verschlußorgan in Gestalt der Platte 7 oder des Stempels 16 dient im Falle einer Betriebsstörung als Sicherheitseinrichtung. Es ermöglicht durch schlagartige Betätigung der Kolben-Zylinder-Einheit 8 ein sofortiges Abschalten der Vorrichtung, ohne dabei die Wirkung der Förderschnecke 2 zu beeinträchtigen, weil letztere dann — wie während des Anfahrens — durch die Ablaßöffnung 9 ins Freie fördert.

## Patentansprüche

1. Vorrichtung zum Eintragen von festen Brennstoffen in einen Druckvergasungsreaktor nach dem Wirbelbett- oder Flugstaub-Prinzip mit mindestens einer in einem eng anliegenden Gehäuse drehbaren Förderschnecke, von welcher der gegebenenfalls mit einem Bindemittel vermischte feinteilige Brennstoff zu einem gasdichten Massepfropfen verdichtet und durch eine mit dem Druckvergasungsreaktor in Verbindung stehende Austragsöffnung des Gehäuses ausgestoßen wird, dadurch gekennzeichnet, daß die Austragsöffnung (4, 15) mit einem Verschlußorgan (7, 16) versehen und im Gehäuse (1) nahe der Austragsöffnung (4, 15) eine ins Freie führende, ebenfalls mit einem Verschlußorgan (10) ausgestattete Ablaßöffnung (9) vorgesehen ist, wobei die Verschlußorgane (7, 16, 10) der Austragsöffnung (4, 15) und der Ablaßöffnung (9) wechselweise betätigbar sind.

2. Vorrichtung nach Anspruch 1, dadurch gekennzeichnet, daß das Verschlußorgan (7, 16) der Austragsöffnung (4, 15) koaxial zu dieser bewegbar ist.

3. Vorrichtung nach Anspruch 2, dadurch gekennzeichnet, daß zur Bewegung des Verschlußorgans (7, 16) der Austragsöffnung (4, 15) eine einstellbare, vorzugsweise hydraulische Druckeinrichtung (8) vorgesehen ist.

4. Vorrichtung nach Anspruch 3, dadurch gekennzeichnet, daß das Verschlußorgan eine auf den Rand der Austragsöffnung (4) aufsetzbare Platte (7) ist.

5. Vorrichtung nach Anspruch 3, dadurch gekennzeichnet, daß das Verschlußorgan ein in die als Düse (15) gestaltete Austragsöffnung eintauchender Stempel (16) ist.

6. Vorrichtung nach Anspruch 1, dadurch gekennzeichnet, daß eine oder mehrere auf die Austragsöffnung (4, 15) gerichtete Druckgaszuführungen (13, 17) vorgesehen sind.

7. Vorrichtung nach Anspruch 6, dadurch gekennzeichnet, daß eine Druckgaszuführung (17) koaxial in dem Verschlußorgan (16) der Austragsöffnung (15) angeordnet ist.

## Claims

1. Device for charging solid fuels into a pressurised gasification reactor, on the principle of turbulent bed or fine dust, with at least one conveyor worm, which is rotatable in a closely adjacent housing and by which the finely particulate fuel possibly mixed with a binding means is compacted into a gas-tight mass plug and ejected through a housing discharge opening standing in connection with the pressurised gasification reactor, characterised thereby, that the discharge opening (4, 15) is provided with a closure organ (7, 16) and an outlet opening (9) leading into the open and likewise equipped with a closure organ (10) is provided in the housing (1) near the discharge opening (4, 15), wherein the closure organs (7, 16, 10) of the discharge opening (4, 15) and of the outlet opening (9) are actuable alternately.

2. Device according to claim 1, characterised thereby, that the closure organ (7, 16) of the discharge opening (4, 15) is movable co-axially therewith.

3. Device according to claim 2, characterised thereby, that a settable preferably hydraulic pressure equipent (8) is provided for the movement of the closure organ (7, 16) of the discharge opening (4, 15).

4. Device according to claim 3, characterised thereby, that the closure organ is a plate (7) placeable on the rim of the discharge opening (4).

5. Device according to claim 3, characterised thereby, that the closure organ is a ram (16) entering into the discharge opening structured as nozzle (15).

6. Device according to claim 1, characterised thereby, that one or more pressurised gas feeds (13, 17) are provided and directed towards the discharge opening (4, 15).

7. Device according to claim 6, characterised thereby, that a pressurised gas feed (17) is arranged co-axially in the closure organ (16) of the discharge opening (15).

## Revendications

1. Appareil pour alimenter en combustibles solides un réacteur de gazéification sous pression fonctionnant selon le principe du lit fluidisé ou des poussières en suspension, comportant au moins une vis d'alimentation pouvant tourner dans un corps entourant étroitement celle-ci, cet appareil comprimant en une masse formant bouchon étanche aux gaz le combustible finement divisé, éventuellement mélangé à un liant, et refoulant cette masse par une ouverture de sortie du corps communiquant avec le réacteur de gazéification sous pression, appareil caractérisé en ce que l'ouverture de sortie (4, 15) est munie d'un organe d'obturation (7, 16) et en ce qu'il est prévu dans le corps (1), près de l'ouverture de sortie (4, 15), un orifice de vidange (9), également muni d'un organe d'obturation (10) et qui conduit à l'air libre, de sorte que les organes d'obturation (7, 16, 10) des ouvertures de sortie (4, 15) et de l'orifice de vidange (9) peuvent être alternativement actionnés.

2. Appareil selon la revendication 1, caractérisé en ce que l'organe d'obturation (7, 16) de l'ouverture de sortie (4, 15) peut se déplacer coaxialement par rapport à cette dernière.

3. Appareil selon la revendication 2, caractérisé en ce que, pour déplacer l'organe d'obturation (7, 16) de l'ouverture de sortie (4, 15), il est prévu un dispositif (8) fonctionnant sous pression, réglable, de préférence hydraulique.

4. Appareil selon la revendication 3, caractérisé en ce que l'organe d'obturation est une plaque (7) pouvant être appliquée sur la bordure ou périphérie de l'ouverture de sortie (4).

5. Appareil selon la revendication 3, caractérisé en ce que l'organe d'obturation ist un piston plongeur (16) pouvant pénétrer dans l'ouverture de sortie réalisée en forme d'ajutage (15).

6. Appareil selon la revendication 1, caractérisé en ce qu'il est prévu un ou plusieurs conduits (13, 17) d'admission de gaz comprimé, dirigés vers l'ouverture de sortie (4, 15).

7. Appareil selon la revendication 6, caractérisé en ce qu'un conduit (17) d'admission de gaz comprimé est disposé coaxialement dans l'organe (16) d'obturation de l'ouverture de sortie (15).

## Fig. 1

## Fig. 2

## Fig. 3